# DEMANDE DE BREVET EUROPEEN

(11) **EP 4 303 553 A1**
(43) Date de publication de la demande: **10.01.2024**
(21) Numéro de dépôt: 23184046.3
(22) Date de dépôt: 07.07.2023
(51) Int. Cl.: G01L 3/14, B62M 6/50, B62J 45/411, B62J 45/421

(54) **SYSTÈME DE DÉTERMINATION D'UN COUPLE APPLIQUÉ ENTRE DEUX ORGANES TOURNANTS**

(30) Priorité: 07.07.2022 FR 2206986
(71) Demandeur: NTN Europe, 74000 Annecy (FR)
(72) Inventeur: BAUDU, Alexandre, 74010 Annecy Cedex (FR); RUHLAND, Siegfried, 74010 Annecy Cedex (FR)
(74) Mandataire: Sayettat, Julien Christian

(57) **Abrégé**

L'invention concerne un système de détermination d'un couple appliqué entre deux organes tournants comprenant un corps d'épreuve présentant une bague intérieure (5) solidaire en rotation de moyens d'accouplement dudit corps d'épreuve à un premier des organes, et une bague extérieure (6) s'étendant autour de la bague intérieure (5) en présentant des moyens d'accouplement dudit corps d'épreuve au deuxième des organes, lesdites bagues étant reliées par une structure déformable, la bague intérieure (5) présentant un alésage dans lequel une noix (30) d'accouplement du corps d'épreuve avec le premier organe est rapportée, ladite noix étant fixée dans ledit alésage.

## Description

L'invention concerne un système de détermination d'un couple appliqué entre deux organes tournants dans un sens autour d'un axe géométrique de rotation.

Les organes peuvent notamment être intégrés dans une transmission d'un couple moteur à un véhicule, par exemple au niveau du pédalier d'un vélo à assistance électrique.

Pour ce faire, il est connu d'utiliser un corps d'épreuve présentant une bague intérieure solidaire en rotation de moyens d'accouplement dudit corps d'épreuve à un premier des organes, et une bague extérieure s'étendant autour de la bague intérieure en présentant des moyens d'accouplement dudit corps d'épreuve au deuxième des organes, lesdites bagues étant reliées de façon concentrique autour de l'axe de rotation par une structure déformable qui est agencée pour transmettre le couple entre les organes tout en autorisant un débattement angulaire entre lesdites bagues en fonction du couple appliqué entre les organes.

Un tel corps d'épreuve peut être instrumenté avec un codeur en équipant chacune des bagues d'un anneau portant une piste magnétique respectivement intérieure et extérieure qui est apte à émettre un signal périodique représentatif du déplacement en rotation de la bague correspondante. En particulier, chacune des pistes présente une succession de paires de pôles Nord et Sud pour former une piste magnétique multipolaire délivrant un signal magnétique pseudo-sinusoïdal.

Le système de détermination comprend alors un capteur présentant un premier - respectivement un deuxième - motif d'éléments sensibles disposé à distance de lecture de la piste intérieure - respectivement de la piste extérieure - pour former un signal représentatif de la position angulaire de l'anneau correspondant.

Le document FR-2 821 931 décrit l'utilisation d'un dispositif de comparaison de tels signaux qui est apte à déterminer un angle de déplacement relatif des bagues, et donc le couple appliqué en ce qu'il induit ledit angle par torsion d'une structure déformable.

Dans certaines applications, notamment en relation avec la transmission d'un vélo à assistance électrique, la place disponible pour l'implantation du corps d'épreuve est fortement limitée. Il en résulte la nécessité de concevoir des corps d'épreuve d'encombrement réduit, notamment par emboutissage.

Cette contrainte est d'autant plus critique pour la réalisation des moyens d'accouplement, notamment ceux de la bague intérieure, dans la mesure où le maximum de l'espace disponible est utilisé pour la structure déformable afin d'optimiser la qualité de la détermination du couple.

L'invention a pour but d'améliorer l'art antérieur en proposant notamment un système de détermination dont le corps d'épreuve peut être compact et réalisé par emboutissage, tout en facilitant la réalisation de son accouplement aux organes tournants, notamment au niveau de la bague intérieure.

A cet effet, l'invention propose un système de détermination d'un couple appliqué entre deux organes tournants dans un sens autour d'un axe géométrique de rotation, ledit système comprenant :
- un corps d'épreuve présentant une bague intérieure solidaire en rotation de moyens d'accouplement dudit corps d'épreuve à un premier des organes, et une bague extérieure s'étendant autour de la bague intérieure en présentant des moyens d'accouplement dudit corps d'épreuve au deuxième des organes, lesdites bagues étant reliées de façon concentrique autour de l'axe par une structure déformable qui est agencée pour transmettre le couple entre les organes tout en autorisant un débattement angulaire entre lesdites bagues en fonction du couple appliqué entre lesdits organes ;
- un dispositif de détermination d'un angle entre les bagues qui est fonction du couple appliqué ;
la bague intérieure présentant un alésage dans lequel une noix d'accouplement du corps d'épreuve avec le premier organe est rapportée, ladite noix étant fixée dans ledit alésage.

D'autres objets et avantages de l'invention apparaîtront dans la description qui suit, faite en référence aux figures annexées, dans lesquelles :
- la figure 1 est une représentation partielle en perspective coupée transversalement du pédalier d'un vélo à assistance électrique équipé d'un système de détermination de couple selon l'invention, la figure 1a étant un zoom éclaté de la figure 1 montrant plus particulièrement le montage du corps d'épreuve, la figure 1b étant une vue en coupe longitudinale éclatée du pédalier de la figure 1 ;
- la figure 2 est une vue en perspective éclatée du corps d'épreuve de la figure 1, la figure 2a étant une coupe transversale de ce corps d'épreuve dépourvu de codeurs ;
- la figure 3 est une vue de face d'un corps d'épreuve dépourvu de codeur et de noix d'accouplement selon un autre mode de réalisation, la figure 3a étant une coupe transversale de ce corps d'épreuve avec la noix ;
- la figure 4 est une vue en coupe transversale d'un corps d'épreuve dépourvu de codeur selon un autre mode de réalisation.

En relation avec ces figures, on décrit ci-dessous un système de détermination d'un couple appliqué entre deux organes tournants 1, 2 dans un sens autour d'un axe géométrique de rotation R.

Dans cette description, les termes de positionnement dans l'espace sont pris en référence à l'axe R de rotation. En particulier, les termes « intérieur » et « extérieur » sont relatifs à une disposition respectivement proche et à distance de cet axe R, et les termes « axial » et « radial » sont relatifs à une disposition respectivement suivant cet axe R et s'éloignant ou se rapprochant de lui.

En particulier, le système permet la détermination d'un couple appliqué entre deux organes 1, 2 intégrés dans une transmission d'un couple moteur à un véhicule, par exemple au niveau du pédalier d'un vélo à assistance électrique.

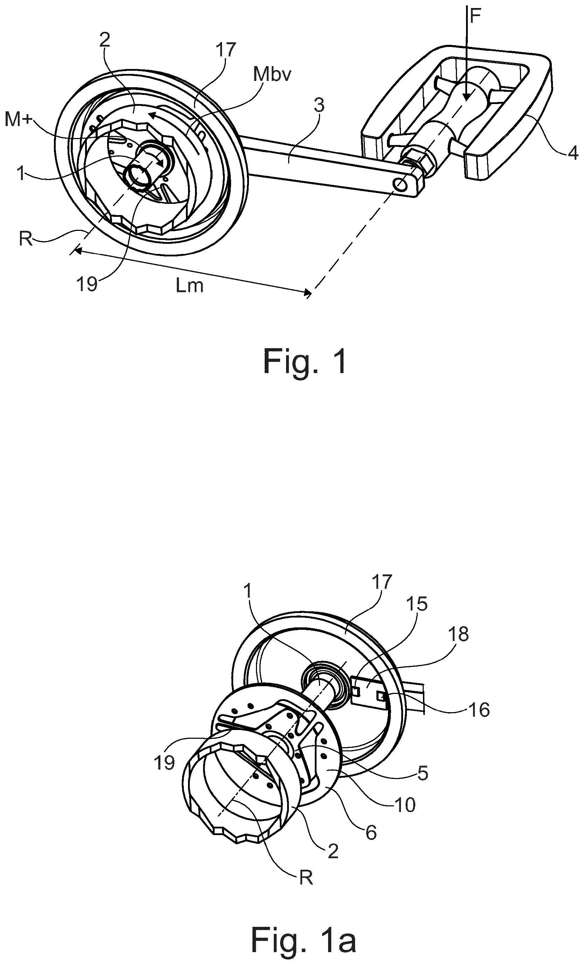

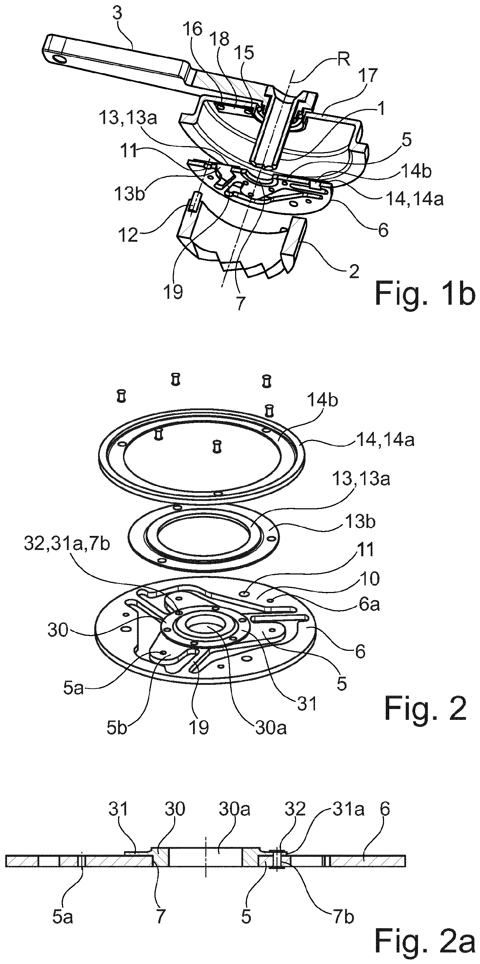

La figure 1 représente un pédalier d'un vélo à assistance électrique comprenant une manivelle 3 équipée d'une pédale 4, ladite manivelle étant montée sur un arbre entraîné en rotation selon l'axe R pour former un organe 1 d'application d'un couple de pédalage M+ suivant le sens de pédalage.

Le système comprend un corps d'épreuve qui permet de transmettre le couple de pédalage M+ à l'autre des organes 2, qui, sur les figures, est représenté sous la forme d'un manchon, par exemple d'un porte satellite d'un train épicycloïdal d'une boîte de vitesse motorisée, exerçant un couple Mbv.

Dans cette application, l'effort de pédalage F en bout de pédale 4 à considérer suivant la norme EN15194 : 2017 est de 1 500 N qui, avec une longueur Lm de manivelle de 165 mm, engendre un couple M+ de l'ordre de 250 Nm. En particulier, le couple à transmettre par le corps d'épreuve n'est que dans un sens de rotation (celui représenté M+ sur les figures), dans la mesure où l'autre sens correspond à la roue libre du vélo.

Le corps d'épreuve présente une bague intérieure 5 solidaire en rotation de moyens d'accouplement dudit corps d'épreuve au premier organe 1, et une bague extérieure 6 s'étendant autour de la bague intérieure 5 en présentant des moyens d'accouplement dudit corps d'épreuve au deuxième organe 2.

En relation avec les figures, la bague intérieure 5 présente un alésage 7 équipé des moyens d'accouplement sur l'arbre, par exemple sous la forme d'un taraudage ou de cannelures.

S'agissant de l'accouplement à l'autre organe 2, les figures représentent une paroi circonférentielle intérieure de la bague extérieure 6 qui présente au moins un lobe radial 10 qui est équipé d'un moyen de fixation de ladite bague extérieure sur le manchon. En particulier, trois lobes 10 à 120° sont prévus, chacun d'eux présentant un orifice 11 de fixation notamment par une goupille 12 ou par vissage dans un orifice complémentaire du manchon.

Les bagues 5, 6 sont reliées par une structure déformable qui est agencée pour transmettre le couple entre les organes 1, 2 tout en autorisant un débattement angulaire entre lesdites bagues en fonction du couple appliqué entre lesdits organes.

En particulier, le couple résultant des couples de pédale M+ sur la bague intérieure 5 et du couple Mbv appliqué par le manchon sur la bague extérieure 6 induit une torsion entre les bagues 5, 6 et donc un déplacement angulaire relatif desdites bagues suivant un angle de torsion qui est fonction dudit couple.

Le système comprend un dispositif de détermination de l'angle entre les bagues 5, 6 qui, notamment en tenant compte de la raideur de la structure déformable, est fonction du couple appliqué.

Selon une réalisation, le dispositif de détermination comprend :
- un codeur réalisé en équipant chacune des bagues (5, 6) d'un anneau 13, 14 portant une piste magnétique respectivement intérieure 13a et extérieure 14a qui est apte à émettre un signal périodique représentatif du déplacement en rotation de la bague 5, 6 correspondante ;
- un capteur comprenant un premier 15 - respectivement un deuxième 16 - motif d'éléments sensibles disposé à distance de lecture de la piste intérieure 13a - respectivement de la piste extérieure 14a - pour former un signal représentatif de la position angulaire de l'anneau 13, 14 correspondant ;
- un dispositif de comparaison des signaux délivrés par le capteur, ledit dispositif étant apte à déterminer un angle entre les bagues 5, 6 qui est fonction du couple appliqué.

En relation avec les figures, l'axe du pédalier est monté en rotation dans un carter 17 sur lequel le capteur est implanté avec les motifs 15, 16 à distance de lecture des pistes 13a, 14a correspondantes.

Selon une réalisation, chacun des anneaux 13, 14 est porté par une armature respectivement intérieure 13b et extérieure 14b, la bague intérieure 5 - respectivement extérieure 6 - présentant des moyens de fixation de l'armature intérieure 13b - respectivement extérieure 14b - sur elle.

En particulier, chacune des bagues 5, 6 présente des orifices 5a, 6a de fixation des armatures 13b, 14b, notamment par vissage ou rivetage. En relation avec les figures, trois orifices 5a, 6a de fixation sont disposés à 120° les uns des autres en étant formés sur chacun des lobes 10.

La paroi circonférentielle extérieure de la bague intérieure 5 présente également des lobes radiaux 5b sur lesquels les orifices de fixation 5a de l'armature intérieure 13a sont formés.

Selon une réalisation, une succession de paires de pôles Nord et Sud est aimantée sur respectivement un anneau 13, 14 pour former une piste magnétique multipolaire 13a, 14a apte à émettre un signal magnétique de forme pseudo-sinusoïdale.

Les anneaux 13, 14 peuvent comprendre une matrice annulaire, par exemple réalisée à base d'un matériau plastique ou élastomère, dans laquelle sont dispersées des particules magnétiques, notamment des particules de ferrite ou de terres rares comme le NdFeB, lesdites particules étant aimantées pour former les pistes magnétiques 13a, 14a.

Chaque motif 15, 16 peut comprendre au moins deux éléments sensibles, notamment une pluralité d'éléments sensibles alignés, tel que décrit dans les documents FR-2 792 403, EP-2 602 593 et EP-2 602 594.

Les éléments sensibles peuvent être à base d'un matériau magnétorésistif dont la résistance varie en fonction du signal magnétique de la piste 13a, 14a à détecter, par exemple de type AMR, TMR ou GMR, ou d'une sonde à effet Hall.

Selon une réalisation, la position angulaire peut être déterminée de façon incrémentale au moyen du signal émis par une piste magnétique 13a, 14a. Selon une autre réalisation, la position angulaire peut être déterminée de façon absolue, c'est-à-dire par rapport à une position de référence, en prévoyant une piste magnétique secondaire ou un codage spécifique sur l'anneau 13, 14.

Le système comprend en outre un dispositif de comparaison des signaux délivrés par le capteur, ledit dispositif étant apte à déterminer un angle entre les bagues 5, 6 qui est fonction du couple appliqué. En relation avec les figures, le capteur comprend une carte 18 sur laquelle les motifs 15, 16 d'éléments sensibles sont implantés dans un circuit électronique.

Selon une réalisation, les capteurs délivrent des signaux carrés incrémentaux en quadrature, le dispositif de comparaison comprenant des moyens de comptage indiquant la position angulaire de chacun des anneaux 13, 14 et des moyens de soustraction permettant de calculer la différence entre lesdites positions angulaires, notamment tels que décrit dans le document FR-2 821 931.

La structure déformable comprend un ensemble de branches 19 réparties angulairement entre les bagues 5, 6. En particulier, les branches 19 et les bagues 5, 6 sont formées d'une seule pièce, notamment par emboutissage d'un flan en matériau métallique.

En particulier, les branches 19 sont inclinées dans le sens inverse de la rotation, ce qui engendre un bras de levier qui, en sollicitant les branches 19 en traction, réduit les contraintes d'une manière très efficace avec comme contrepartie une augmentation de la raideur.

Sur les figures, le corps d'épreuve comprend trois branches 19 qui sont séparées par un secteur dépourvu de branche. En particulier, les secteurs dépourvus de branche s'étendent sur angle qui est supérieur à 60°, les lobes 10 s'étendant chacun dans un secteur dépourvu de branche.

Pour faciliter la réalisation de l'accouplement de la bague intérieure 5 au premier organe 1, une noix 30 d'accouplement du corps d'épreuve avec ledit premier organe est rapportée en étant emmanchée dans l'alésage 7.

Cette réalisation permet de fixer la noix dans l'alésage 7, notamment de façon indémontable, en maitrisant parfaitement sa position axiale par rapport à la bague intérieure 5 de sorte à garantir la distance de lecture de la piste magnétique intérieure 13a par le premier capteur 15. En outre, l'emmanchement de la noix 30 peut être réalisé sans jeu radial de sorte à limiter les battements préjudiciables à une bonne détermination de l'angle entre les bagues 5, 6.

Cette réalisation permet également une fabrication simplifiée des bagues 5, 6 et de la structure déformable, notamment par emboutissage, et d'usiner séparément la noix d'accouplement 30 avant sa fixation. Outre le bénéfice économique de la formation du corps par emboutissage, la bague intérieure 5 peut être réalisée avec une dimension juste suffisante pour la fixation de la noix 30, afin de bénéficier d'un corps d'épreuve compact tout en maximisant la longueur des branches déformables 19.

En particulier, la noix 30 peut présenter un alésage 30a permettant un accouplement du corps d'épreuve sur un arbre du premier organe 1, ledit alésage étant équipé d'un taraudage ou de cannelures d'accouplement.

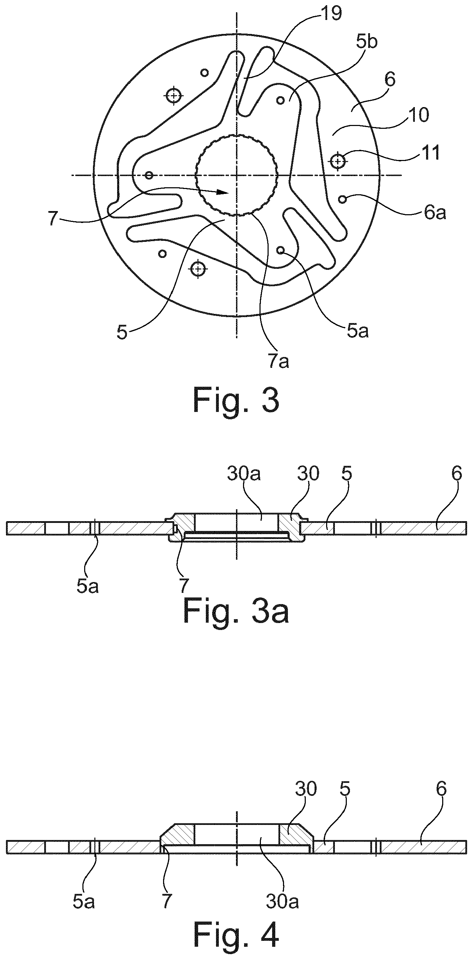

De façon avantageuse, l'alésage 7 de la bague intérieure 5 peut présenter des moyens géométriques, par exemple des cannelures 7a (figure 3), la périphérie extérieure de la noix 30 présentant des moyens géométriques complémentaire, par exemple des cannelures complémentaires, pour fiabiliser la tenue en rotation de ladite noix dans ledit alésage.

En relation avec la figure 3a, la noix 30 emmanchée peut être maintenue dans l'alésage 7 par sertissage, la figure 4 montrant une réalisation dans laquelle la noix 30 est maintenue dans ledit alésage par soudure.

Sur les figures 1 et 2, la noix 30 est maintenue dans l'alésage 7 par rivetage. Pour ce faire, la noix 30 présente une bride 31 dans laquelle des orifices 31a sont formés, le bord de l'alésage 7 étant pourvu d'orifices complémentaires 7b permettant le rivetage de ladite noix au moyen de rivets 32.

## Revendications

1. Système de détermination d'un couple appliqué entre deux organes tournants (1, 2) dans un sens autour d'un axe géométrique de rotation (R), ledit système comprenant :
- un corps d'épreuve présentant une bague intérieure (5) solidaire en rotation de moyens d'accouplement dudit corps d'épreuve à un premier des organes (1), et une bague extérieure (6) s'étendant autour de la bague intérieure (5) en présentant des moyens d'accouplement dudit corps d'épreuve au deuxième des organes (2), lesdites bagues étant reliées de façon concentrique autour de l'axe (R) par une structure déformable qui est agencée pour transmettre le couple entre les organes (1, 2) tout en autorisant un débattement angulaire entre lesdites bagues en fonction du couple appliqué entre lesdits organes ;
- un dispositif de détermination d'un angle entre les bagues (5, 6) qui est fonction du couple appliqué ;
ledit système étant **caractérisé en ce que** la bague intérieure (5) présente un alésage (7) dans lequel une noix (30) d'accouplement du corps d'épreuve avec le premier organe (1) est emmanchée en étant fixée dans ledit alésage.

2. Système de détermination d'un couple selon la revendication 1, **caractérisé en ce que** la noix (30) présente un alésage (30a) permettant un accouplement du corps d'épreuve sur un arbre du premier organe (1), ledit alésage étant équipé d'un taraudage ou de cannelures d'accouplement.

3. Système de détermination d'un couple selon l'une des revendications 1 ou 2, **caractérisé en ce que** l'alésage (7) de la bague intérieure (5) présente des moyens géométriques, la périphérie extérieure de la noix (30) présentant des moyens géométriques complémentaires pour fiabiliser la tenue en rotation de ladite noix dans ledit alésage.

4. Système de détermination d'un couple selon l'une quelconque des revendications 1 à 3, **caractérisé en ce que** la noix (30) est maintenue dans l'alésage (7) par sertissage.

5. Système de détermination d'un couple selon l'une quelconque des revendications 1 à 3, **caractérisé en ce que** la noix (30) est maintenue dans l'alésage (7) par soudure.

6. Système de détermination d'un couple selon l'une quelconque des revendications 1 à 3, **caractérisé en ce que** la noix (30) est maintenue dans l'alésage (7) par rivetage.

7. Système de détermination d'un couple selon la revendication 6, **caractérisé en ce que** la noix (30) présente une bride (31) dans laquelle des orifices (31a) sont formés, le bord de l'alésage (7) étant pourvu d'orifices complémentaires (7b) permettant le rivetage de ladite noix.

8. Système de détermination d'un couple selon l'une quelconque des revendications 1 à 7, **caractérisé en ce que** le corps d'épreuve est formé par emboutissage.

9. Système de détermination d'un couple selon l'une quelconque des revendications 1 à 8, **caractérisé en ce que** la structure déformable comprend un ensemble de branches (19) réparties angulairement entre les bagues (5, 6).

10. Système de détermination d'un couple selon la revendication 9, **caractérisé en ce que** la structure déformable comprend trois branches (19) séparées par un secteur dépourvu de branche qui s'étend sur un angle supérieur à 60°.

11. Système de détermination d'un couple selon la revendication 10, **caractérisé en ce que** la bague extérieure (6) présente au moins un lobe radial (10) qui s'étend dans un secteur angulaire dépourvu de branche (19).

12. Système de détermination d'un couple selon l'une quelconque des revendications 1 à 11, **caractérisé en ce que** le dispositif de détermination comprend :
- un codeur réalisé en équipant chacune des bagues (5, 6) d'un anneau (13, 14) portant une piste magnétique respectivement intérieure (13a) et extérieure (14a) qui est apte à émettre un signal périodique représentatif du déplacement en rotation de la bague (5, 6) correspondante ;
- un capteur comprenant un premier (15) - respectivement un deuxième (16) - motif d'éléments sensibles disposé à distance de lecture de la piste intérieure (13a) - respectivement de la piste extérieure (14a) - pour former un signal représentatif de la position angulaire de l'anneau (13, 14) correspondant ;
- un dispositif de comparaison des signaux délivrés par le capteur, ledit dispositif étant apte à déterminer un angle entre les bagues (5, 6) qui est fonction du couple appliqué.
